# EUROPEAN PATENT SPECIFICATION

(11) **EP 4 310 994 B1**
(45) Date of publication and mention of the grant of the patent: **25.03.2026**
(21) Application number: 23743416.2
(22) Date of filing: 13.01.2023
(51) Int. Cl.: H01M 10/653, H01M 50/24, H01M 50/20, H01M 10/6554, H01M 10/625, H01M 50/249, H01M 50/242, H01M 50/209, H01M 50/227, H01M 50/50, H01M 50/503, H01M 50/507, H01M 10/6551, H01M 50/213, H01M 50/258, H01M 50/298, H01M 10/613

(54) **BATTERY MODULE HAVING IMPROVED IMPACT RESISTANCE AND SAFETY AND BATTERY PACK INCLUDING SAME**
BATTERIEMODUL MIT VERBESSERTER SCHLAGFESTIGKEIT UND SICHERHEIT SOWIE BATTERIEPACK DAMIT
MODULE DE BATTERIE AYANT UNE RÉSISTANCE AUX CHOCS ET UNE SÉCURITÉ AMÉLIORÉES, ET BLOC-BATTERIE LE COMPRENANT

(30) Priority: 24.01.2022 KR 20220010180; 23.12.2022 KR 20220183559
(43) Date of publication of application: 24.01.2024
(73) Proprietor: LG ENERGY SOLUTION, LTD., Seoul 07335 (KR)
(72) Inventor: HUR, Jae Yong, Daejeon 34122 (KR); YOON, Hyoung Chul, Daejeon 34122 (KR)
(74) Representative: Goddar, Heinz J.
(86) International application number: PCT/KR2023/000640
(87) International publication number: WO 2023/140568

(56) References cited:
- EP-A1- 3 937 299
- KR-A- 20190 023 917
- KR-A- 20190 083 533
- KR-A- 20190 083 533
- KR-A- 20200 086 957
- KR-A- 20210 078 139
- KR-A- 20210 086 089
- KR-A- 20210 156 220
- KR-A- 20230 114 180

## Description

### [Technical Field]

This application claims the benefit of priority to Korean Patent Application No. 2022-0010180 filed on January 24, 2022 and Korean Patent Application No. 2022-0183559 filed on December 23, 2022.

The present invention relates to a battery module with improved impact resistance and safety and a battery pack including the same, and more particularly to a battery module with improved impact resistance and safety, wherein the battery module is configured to have a structure in which inner parts, including battery cells, are disposed in completely tight contact with each other without movement and to block venting gas or flames, and a battery pack including the same.

KR 20210078139 A relates to a sub-pack including a plurality of unit modules and a BMS assembly and a battery pack including the same. EP 3 937 299 A1 relates to a battery module and a battery pack.

### [Background Art]

With introduction of environmentally-friendly energy policy, a battery market using lithium secondary batteries has been gradually enlarged. In addition, with technological development of lithium secondary batteries, capacities and energy densities of lithium secondary batteries have been rapidly increased, whereby usage of lithium secondary batteries in green energy has increased.

Heat is generated from a lithium secondary battery during normal charging and discharging, and therefore the temperature of the lithium secondary battery inevitably increases. An excessive increase in temperature of the second battery reduces performance of a battery cell.

There is a danger of the lithium secondary battery exploding when the lithium secondary battery overheats. When flames generated as the result of explosion spread to battery cells adjacent thereto, it is difficult to extinguish fire until the battery cells are completely combusted.

In addition, when a thermal runaway phenomenon occurs in a battery cell, high-temperature flames higher than an ignition point, sparks, and venting gas may be generated, and the frames may be transferred to battery cells adjacent thereto, which may eventually lead to explosion of the battery cells.

In order to reduce temperatures of flames and sparks generated in the battery cell, therefore, a battery module or a battery pack may be designed so as to have a structure capable of rapidly discharging heat to the outside in order to prevent additional damage due to explosion of the battery cells.

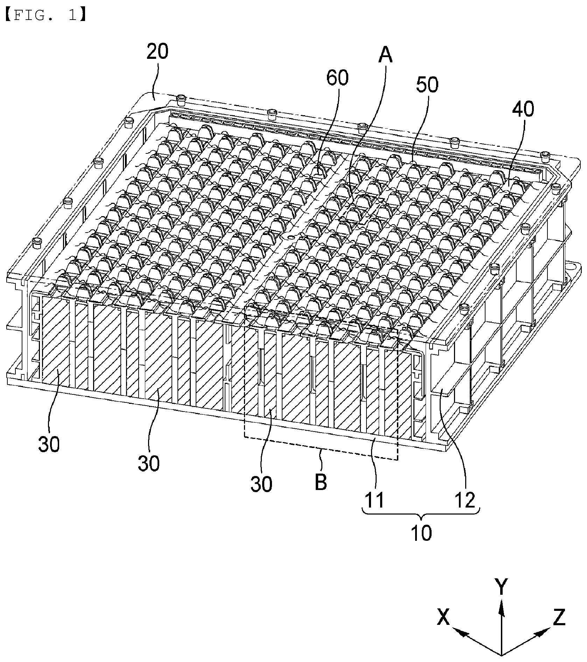

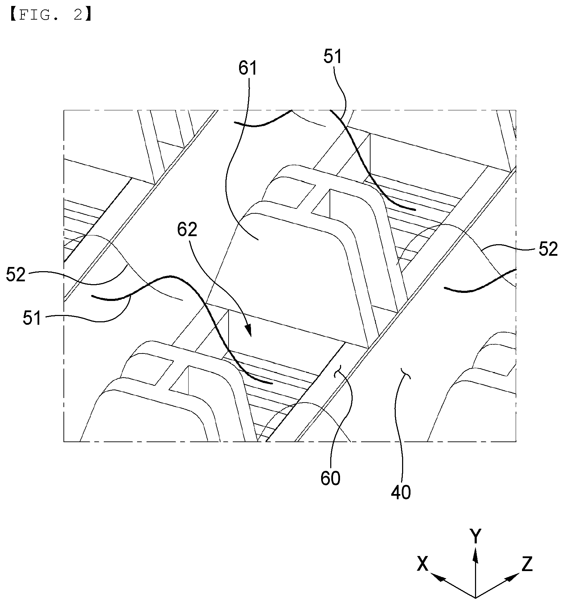

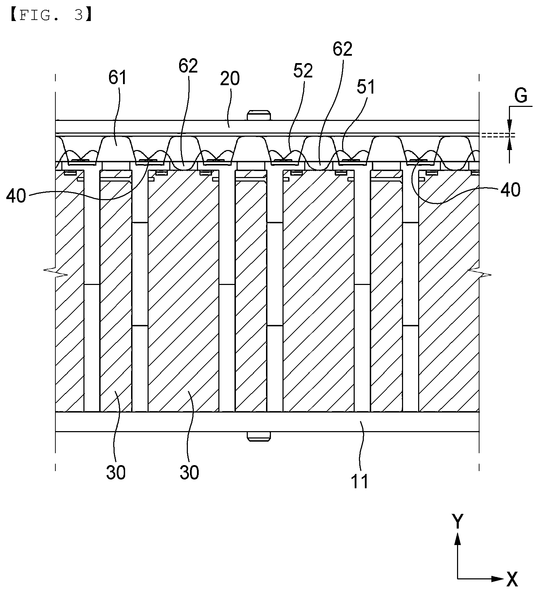

FIG. 1 is a perspective view of a conventional battery module, FIG. 2 is an enlarged perspective view of part A of FIG. 1, and FIG. 3 is an enlarged sectional view of part B of FIG. 1.

As shown in FIGs. 1 to 3, cylindrical battery cells 30 may be received side by side in an upright state in a first case 10 and a second case 20, and the battery cells 30 may be connected to each other in parallel or in series via busbars 40 and wires 50 to constitute a battery module.

The first case 10 is constituted by a first frame 11, on which one end of each of the battery cells 30 is seated, and a second frame 12 configured to protect the battery cells 30 while wrapping side surfaces thereof.

That is, a plurality of long bar-shaped busbars 40 is disposed above the plurality of cylindrical battery cells 30. A top cap and a crimping portion of each of the battery cells 30 functioning as a positive electrode terminal and a negative electrode terminal, respectively, are electrically connected to a busbar 40 adjacent thereto via a first wire 51 and a second wire 52 extending through openings 62 of a rib structure 60.

The first wire 51 and the second wire 52 are formed by a metal continuously discharged through a nozzle (not shown), and connect the terminals of the battery cell and the busbar by wire bonding.

When wire bonding is used, there is an advantage in that it is possible to rapidly and accurately form an electrical connection structure. In order to prevent contact with the second case 20, however, it is necessary to provide an empty space in a region in which the wire 50 is located. Also, in order to protect the wire 50 while preventing deformation of the second case 20 due to external impact, a rib 61 extending to a predetermined height may be further formed. Of course, design may be performed such that a predetermined gap G is formed in consideration of assembly tolerance, although an upper surface of the rib 61 and an inner surface of the second case 20 may be brought into tight contact with each other when the first case 10 and the second case 20 are assembled.

It is possible to relatively easily assemble the battery module having the above structure. Since an empty space is present in the region in which the positive electrode terminals of the battery cells 30 and the rib structure are located, however, it is difficult to mount the battery module in a device such that the positive electrode terminals of the battery cells 30 face downwards. Furthermore, when thermal runaway occurs in a specific battery cell, thermal runaway or fire outbreak may easily occur in battery cells adjacent thereto in succession.

### [Disclosure]

### [Technical Problem]

The present invention has been made in view of the above problems, and it is an object of the present invention to provide a battery module configured to be mounted in a device irrespective of directions in which battery cells are received in the battery module while exhibiting high resistance to external impact and a battery pack including the same.

It is another object of the present invention to provide a battery module capable of minimizing a chain of fire outbreaks and a battery pack including the same.

### [Technical Solution]

A battery module according to the present invention to accomplish the above objects includes a first case (100) having a receiving space; a plurality of battery cells (300) received in the receiving space in an upright state such that a positive electrode terminal of each of the plurality of battery cells faces upwards; one or more busbars (400) located in the vicinity of the positive electrode terminals of the plurality of battery cells (300); a wire (500) configured to electrically connect each of the plurality of battery cells (300) and the one or more busbars (400) to each other; a rib structure (600) located above the plurality of battery cells (300), the rib structure being provided with an upwardly protruding rib (610) configured to protect the wire (500) and an opening (620) configured to allow the wire (500) to extend therethrough; and a resin layer (700) provided above the plurality of battery cells (300).

Also, the battery module according to the present invention further includes a second case (200) provided on the resin layer (700), the second case being fixed to the first case (100).

Also, in the battery module according to the present invention, an upper surface of the resin layer (700) may be flat.

Also, in the battery module according to the present invention, the resin layer (700) may be provided so as to be brought into completely tight contact with upper surfaces of the plurality of battery cells (300), the one or more busbars (400), the wires (500), and the rib structure (600).

Also, in the battery module according to the present invention, the height of the rib may be equal to or greater than the height of the wire after bonding.

Also, in the battery module according to the present invention, the height of the resin layer may be equal to or greater than the height of the rib.

Also, the battery module according to the present invention further includes a pad (800) located between the resin layer (700) and the second case (200).

Also, in the battery module according to the present invention, the pad (800) may be made of a thermally conductive material.

Also, in the battery module according to the present invention, the pad (800) may be made of an elastic and compressible material.

Also, in the battery module according to the present invention, an upper surface of the resin layer (700) and a lower surface of the pad (800) may be located in tight contact with each other.

Also, in the battery module according to the present invention, an upper surface of the pad (800) and a lower surface of the second case (200) may be located in tight contact with each other.

Also, in the battery module according to the present invention, the pad (800) may be provided with a plurality of space portions (810), the space portions (810) being formed through the pad (800).

Also, in the battery module according to the present invention, each of the space portions (810) may be located on a vertical extension line of a corresponding one of the plurality of battery cells (300).

Also, in the battery module according to the present invention, the space portions (810) may be formed in a same number as the plurality of battery cells (300).

In addition, the present invention provides a battery pack including the battery module.

### [Advantageous Effects]

As is apparent from the above description, a battery module according to the present invention has a merit in that a space portion, in which wires and a rib structure for electrical connection are located, is filled with a resin layer, whereby it is possible to prevent movement of parts, and in that it is possible to freely change an installation direction of the battery module irrespective of directions in which battery cells are received therein.

In addition, the battery module according to the present invention has an advantage in that a pad made of a heat dissipation material is located so as to abut the resin layer, whereby it is possible to rapidly discharge heat generated in the battery module to the outside.

Furthermore, the battery module according to the present invention has a merit in that space portions are provided in the pad, and therefore when gas is generated or thermal runaway occurs in a specific battery cell, it is possible to minimize transfer of the gas or the heat to battery cells adjacent thereto.

### [Description of Drawings]

FIG. 1 is a perspective view of a conventional battery module.
FIG. 2 is an enlarged perspective view of part A of FIG. 1.
FIG. 3 is an enlarged sectional view of part B of FIG. 1.
FIG. 4 is a perspective view of a battery module which is not in accordance with the claims and provided for illustrative purposes.
FIG. 5 is an exploded perspective view of the battery module of FIG. 4.
FIG. 6 is an enlarged sectional view of part C of FIG. 4.
FIG. 7 is a perspective view of a battery module according to a second preferred embodiment of the present invention.
FIG. 8 is an exploded perspective view of the battery module of FIG. 7.
FIG. 9 is an enlarged sectional view of part D of FIG. 7.
FIG. 10 is a partial enlarged sectional view of a battery module according to a third preferred embodiment of the present invention.
FIG. 11 is a perspective view of a pad according to a third preferred embodiment of the present invention.

### [Best Model

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, a battery module with improved impact resistance and safety according to the present invention and a battery pack including the same will be described.

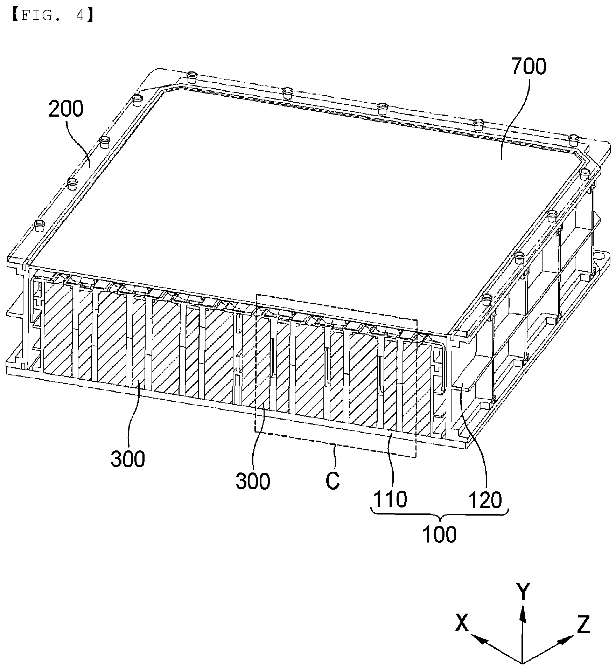

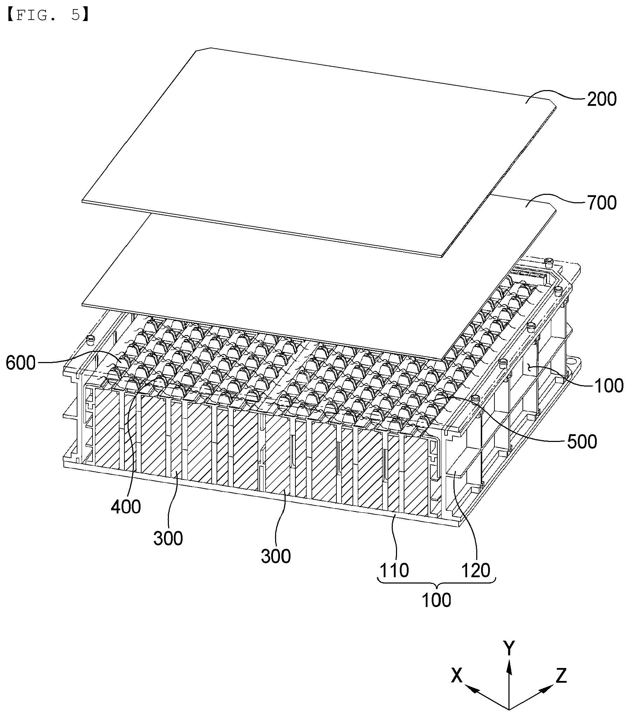

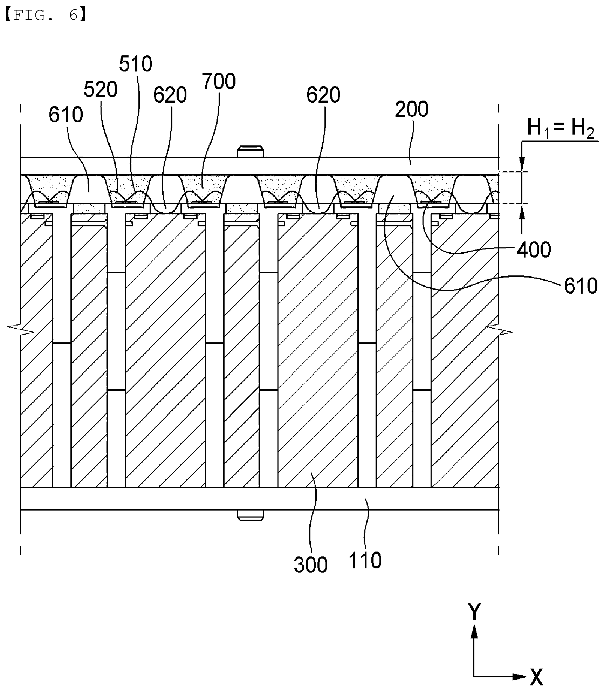

FIG. 4 is a perspective view of a battery module which is not in accordance with the claims and provided for illustrative purposes, FIG. 5 is an exploded perspective view of the battery module of FIG. 4, and FIG. 6 is an enlarged sectional view of part C of FIG. 4.

As shown in FIGs. 4 to 6, the battery module according to the first preferred embodiment of the present invention includes a first case 100 having a receiving space, a second case 200, a plurality of battery cells 300, one or more busbars 400, wires 500, a rib structure 600, and a resin layer 700.

The first case 100 may have a hollow hexahedral shape, and is constituted by a first frame 110, on which one end of each of the battery cells 300 is seated, and a second frame 120 configured to protect the battery cells 300 while wrapping side surfaces thereof.

The second case 200, which is located at an upper part of the first case 100, is configured to protect the received battery cells 300 and various electric parts (not shown), and is fastened to the first case 100.

Each of the battery cells 300 received in the receiving space of the first case 100 may be a cylindrical battery cell; however, the present invention is not limited thereto, and the battery cell may be a prismatic battery cell.

Each of the battery cells 300 is disposed upright such that a top cap and a crimping portion thereof functioning as a positive electrode terminal and a negative electrode terminal, respectively, face upwards, and the busbars 400 and the wires 500 are provided to connect the battery cells 300 to each other in series or in parallel. In addition, the rib structure 600, which is configured to protect the wires 500, is disposed in the vicinity of upper parts of the battery cells 300.

That is, as previously described, a plurality of long bar-shaped busbars 400 is disposed in the vicinity of the upper parts of the battery cells 300 in a state of being spaced apart from each other by a predetermined distance. In addition, the rib structure 600, in which upwardly protruding ribs 610 and openings 620 are alternately provided, is installed in the vicinity of the busbars 400, more specifically, above the battery cells 300, in parallel to the busbars 400.

The top cap of each of the battery cells 300, which functions as the positive electrode terminal, and a corresponding one of the busbars 400 and the crimping portion of each of the battery cells 300, which functions as the negative electrode terminal, and a corresponding one of the busbars 400 are electrically connected to each other via a first wire 510 and a second wire 520, which are formed by bonding, respectively.

Here, each wire, which is a conductive material, such as gold, aluminum, or copper, is formed as the result of a molten conductive material being discharged from the tip of a nozzle (not shown) like a thin thread. Wire bonding is a known technique, and therefore a detailed description thereof will be omitted.

Meanwhile, it is preferable for the height H1 of each of the ribs to be equal to or greater than the height of each of the wires so as to sufficiently protect the bonded wires.

Next, the resin layer 700 will be described. The resin layer 700, which is filled with a resin, is formed in a space portion above the battery cells 300, more specifically in the vicinity of the positive electrode terminals and the negative electrode terminals of the battery cells 300, and in a space portion in which the busbars 400, the wires 500, and the rib structure 600 are located.

When the space portions are filled with a fluid resin, the resin comes into completely tight contact with the busbars 400, the wires 500, and the rib structure 600, including the terminals of the battery cells 300, whereby empty spaces are completely filled with the resin.

The resin, with which the space portions are filled, is hardened while the surface of the resin is flattened over time. As a result, an upper surface of the resin layer 700 becomes flat, and at the same time the parts exposed in the space portions, such as the terminals of the battery cells 300 and the busbars 400, are buried in the resin layer 700, and therefore movement of the parts is limited. Of course, the second case 200 is located on the resin layer 700, and is fastened to the first case 100 via a known fastening means, such as bolts.

Here, the resin may be a thermally conductive polymer resin. For example, the resin may be a polymer composite material including a polymer material, such as epoxy, polyimide, or polystyrene, metal particles, such as Al, Ag, Cu, or Ni, ceramic particles, such as AlN, Al₂O₃, BN, SiC, or BeO, and a carbon-based filler, such as graphite, carbon nanotube, carbon fiber, or graphene.

Conventionally, when a battery module is mounted in a device, there are restrictions depending on installation directions due to an upper space portion in the battery module. Since the space portions are filled with the resin layer 700, however, it is possible to mount the battery module such that the positive electrode terminals of the battery cells 300 face downwards, and furthermore the battery module is capable of withstanding external impact.

Particularly, in consideration of the fact that, for the cylindrical battery cell, gas venting mostly occurs from the crimping portion having the top cap, it is possible to mount the battery module such that the top cap is located in a direction opposite to a driver or a passenger when the battery module is mounted in a device, such as a vehicle, whereby it is possible to minimize injury of the driver.

Meanwhile, it is preferable for the height H2 of the resin layer to be equal to or slightly greater than the height H1 of each of the ribs. The reason for this is that the entirety of the upper surface of the resin layer 700 and the entirety of an inner surface of the second case 200 come into tight contact with each other, whereby it is possible to minimize movement of the busbars 400 and the wires 500.

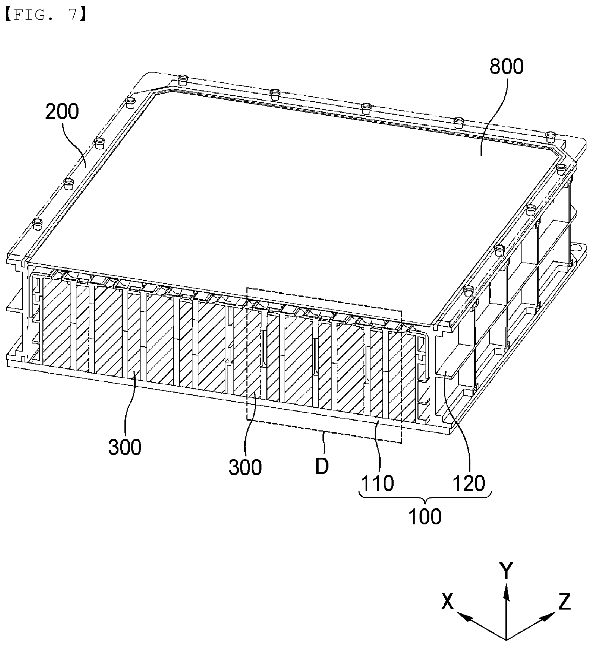

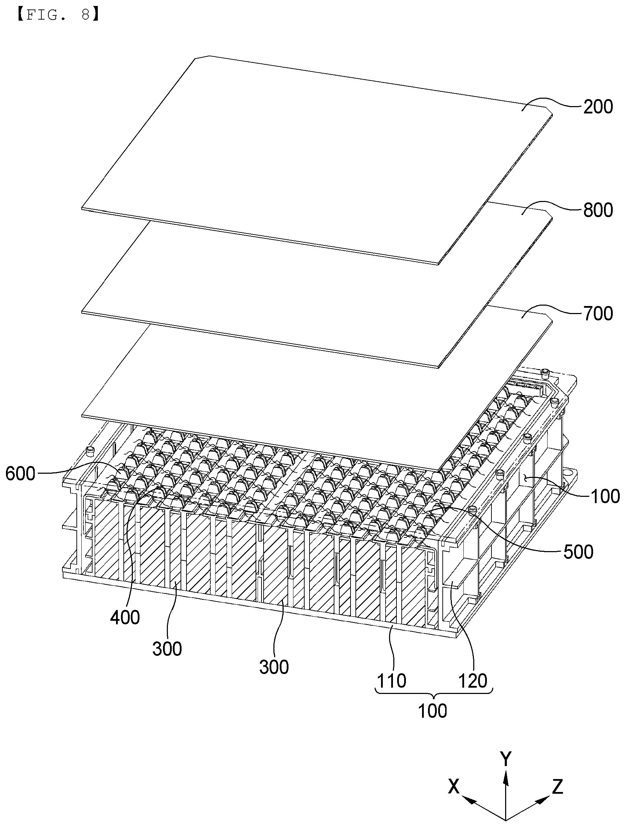

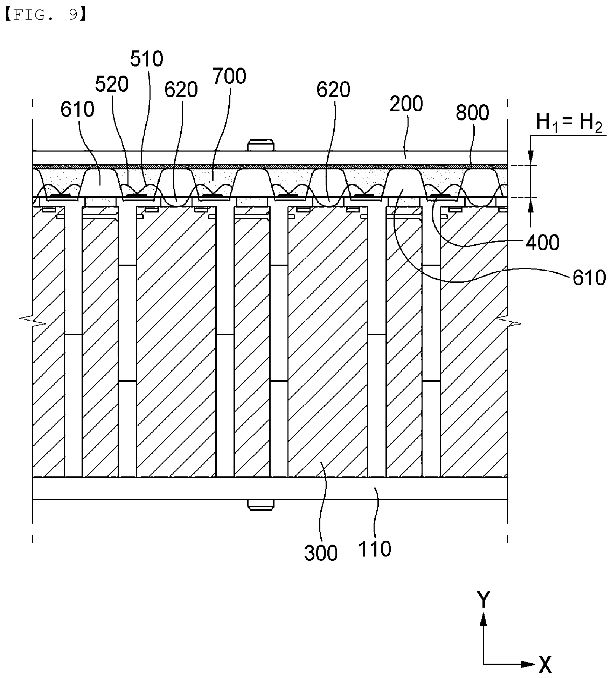

FIG. 7 is a perspective view of a battery module according to a second preferred embodiment of the present invention, FIG. 8 is an exploded perspective view of the battery module of FIG. 7, and FIG. 9 is an enlarged sectional view of part D of FIG. 7.

The second embodiment is identical in construction to the first embodiment described above except that a pad is further provided. Hereinafter, therefore, only the pad, which is a different construction, will be described.

The pad 800 is located between a resin layer 700 and a second case 200, and performs a function of protecting various parts, including battery cells 300, from external impact and a function of discharging heat generated from the battery cells 300 to the outside.

Specifically, the pad 800 has a flat upper surface and a flat lower surface, is configured to have a uniform thickness, and includes a material that exhibits excellent thermal conductivity inside or outside. For example, a metal, ceramic, a polymer composite material, or silicon may be included as the material that exhibits excellent thermal conductivity.

A space between a flat surface of the resin layer 700 and a lower surface of the second case 200 is completely filled with the pad 800. That is, the second case 200, the pad 800, and the resin layer 700 are brought into completely tight contact with each other. Consequently, it is possible to smoothly achieve heat transfer in a direction toward the upper case of the battery module. In particular, when a heat sink (not shown) is disposed on an outer surface of the second case 200, it is possible to further improve cooling performance of the battery module.

In addition, when silicon or a polymer composite material is included as an ingredient of the pad 800, it is possible to achieve both elasticity and compressibility. As a result, it is possible to achieve assembly without a gap even though tolerance may occur during manufacture, in addition to a function of absorbing external impact.

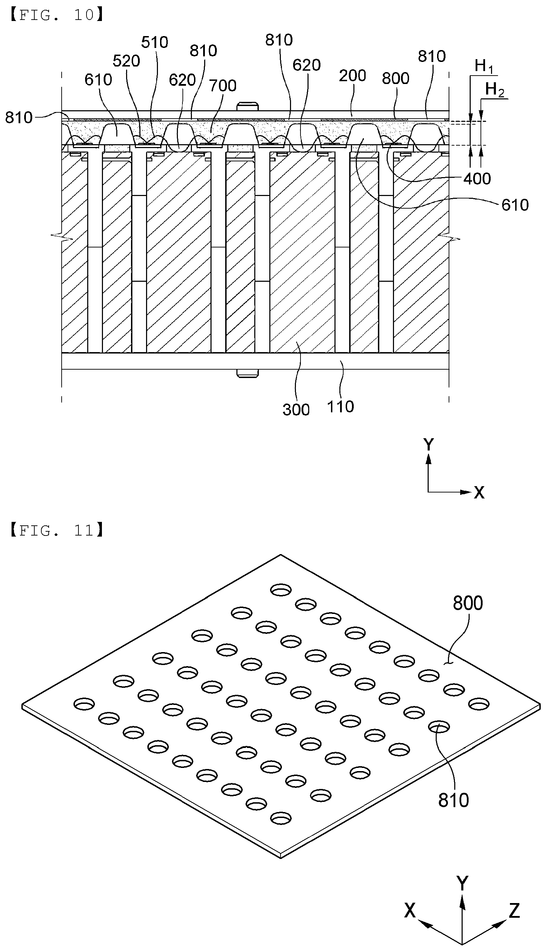

FIG. 10 is a partial enlarged sectional view of a battery module according to a third preferred embodiment of the present invention, and FIG. 11 is a perspective view of a pad according to a third preferred embodiment of the present invention.

The third embodiment is substantially identical in construction to the second embodiment described above except that space portions 810 are formed in the pad 800. Hereinafter, therefore, a description will be given based on the space portions 810 of the pad 800, which are a different construction.

When gas venting or thermal runaway occurs in a specific battery cell due to various causes, such as external impact, it is necessary to block the transfer of high-temperature, high-pressure gas, sparks, or flames to battery cells adjacent thereto.

Each of the space portions 810, which are formed through the pad 800 at predetermined intervals, may serve as a kind of pocket capable of receiving high-temperature, high-pressure gas, sparks, or flames generated in a corresponding battery cell 300 when an event occurs, whereby it is possible to block or delay the movement of the gas or the flames to battery cells adjacent thereto.

That is, when high-temperature, high-pressure gas generated in a specific battery cell 300 rises upwards through the resin layer 700, the high-temperature, high-pressure gas is caught in a corresponding one of the space portions 810 of the pad 800, which exhibits higher heat resistance and physical strength than the resin layer 700, and therefore it is possible to protect battery cells 300 adjacent thereto.

In particular, when the number of the space portions 810 is equal to the number of battery cells 300 constituting the battery module and each of the space portions is located on a vertical extension line of a corresponding one of the battery cells 300, it is possible to further improve safety of the battery module.

Of course, it is preferable for the external shape of each of the space portions 810 to be circular; however, the present invention is not limited thereto. When the external shape of each of the space portions is circular, the outer diameter of each of the space portions may be less than the outer diameter of a corresponding one of the cylindrical battery cells 300.

In addition, the present invention may provide a battery pack including the battery module, and the battery module or the battery pack may be included as an energy source of any one device selected from the group consisting of a light electric vehicle (LEV), an electric vehicle (EV), a hybrid electric vehicle (HEV), a plug-in hybrid electric vehicle (PHEV), an electric bicycle (E-Bike), and an electric scooter (E-Scooter).

Those skilled in the art to which the present invention pertains will appreciate that various applications and modifications are possible within the category of the present invention based on the above description.

### (Description of Reference Symbols)

10, 100: First cases
11, 110: First frames 12, 120: Second frames
20, 200: Second cases
30, 300: Battery cells 40, 400: Busbars
50, 500: Wires
51, 510: First wires 52, 520: Second wires
60, 600: Rib structures
61, 610: Ribs 62, 620: openings
700: Resin layer
800: Pad
810: Space portion
G: Gap
H1: Height of rib
H2: Height of resin layer

## Claims

1. A battery module comprising:
a first case (100) having a receiving space;
a plurality of battery cells (300) received in the receiving space in an upright state such that a positive electrode terminal of each of the plurality of battery cells (300) faces upwards;
one or more busbars (400) located in the vicinity of the positive electrode terminals of the plurality of battery cells (300);
a wire (500, 510, 520) configured to electrically connect each of the plurality of battery cells (300) and the one or more busbars (400) to each other;
a rib structure (600) located above the plurality of battery cells (300), the rib structure (600) being provided with an upwardly protruding rib (610) configured to protect the wire (500, 510, 520) and an opening (620) configured to allow the wire (500, 510, 520) to extend therethrough; **characterized in that**
a resin layer (700) is provided above the plurality of battery cells (300), wherein the battery module further comprises a second case (200) provided on the resin layer (700), the second case (200) being fixed to the first case (100), and a pad (800) located between the resin layer (700) and the second case (200).

2. The battery module according to claim 1, wherein an upper surface of the resin layer (700) is flat.

3. The battery module according to claim 2, wherein the resin layer (700) is provided so as to be brought into completely tight contact with upper surfaces of the plurality of battery cells (300), the one or more busbars (400), the wires (500, 510, 520), and the rib structure (600).

4. The battery module according to claim 1, wherein a height (H1) of the rib (610) is equal to or greater than a height of the wire (500, 510, 520) after bonding.

5. The battery module according to claim 4, wherein a height (H2) of the resin layer (700) is equal to or greater than the height (H1) of the rib (610).

6. The battery module according to claim 1, wherein the pad (800) is made of a thermally conductive material.

7. The battery module according to claim 1, wherein the pad (800) is made of an elastic and compressible material.

8. The battery module according to claim 1, wherein an upper surface of the resin layer (700) and a lower surface of the pad (800) are located in tight contact with each other.

9. The battery module according to claim 8 wherein an upper surface of the pad (800) and a lower surface of the second case (200) are located in tight contact with each other.

10. The battery module according to claim 9, wherein the pad (800) is provided with a plurality of space portions (810), the space portions (810) being formed through the pad (800).

11. The battery module according to claim 10, wherein each of the space portions (810) is located on a vertical extension line of a corresponding one of the plurality of battery cells (300).

12. The battery module according to claim 11, wherein the space portions (810) are formed in a same number as the plurality of battery cells (300).

13. A battery pack comprising the battery module according to any one of claims 1 to 12.

## Patentansprüche

1. Batteriemodul; umfassend:
ein erstes Gehäuse (100) mit einem Aufnahmeraum;
eine Vielzahl von Batteriezellen (300), die derart in dem Aufnahmeraum in einem aufrechten Zustand aufgenommen sind, dass ein positiver Elektrodenanschluss von jeder der Vielzahl von Batteriezellen (300) nach oben weist
eine oder mehrere Stromschienen (400), die in der Nähe der positiven Elektrodenanschlüsse der Mehrzahl von Batteriezellen (300) angeordnet sind;
einen Draht (500, 510, 520), der dazu ausgelegt ist, jede der Vielzahl von Batteriezellen (300) und die eine oder die mehreren Stromschienen (400) miteinander elektrisch verbindet;
eine Rippenstruktur (600), die über der Vielzahl von Batteriezellen (300) angeordnet ist, wobei die Rippenstruktur (600) mit einer nach oben vorstehenden Rippe (610) versehen ist, die dazu ausgelegt ist, den Draht (500, 510, 520) zu schützen, und mit einer Öffnung (620), die dazu ausgelegt ist, dass sich der Draht (500, 510, 520) durch sie hindurch erstrecken kann; **dadurch gekennzeichnet, dass**
eine Harzschicht (700) über der Vielzahl von Batteriezellen (300) vorgesehen ist, wobei das Batteriemodul ferner ein zweites Gehäuse (200) umfasst, das auf der Harzschicht (700) vorgesehen ist, wobei das zweite Gehäuse (200) an dem ersten Gehäuse (100) befestigt ist, und ein Kissen (800), das zwischen der Harzschicht (700) und dem zweiten Gehäuse (200) angeordnet ist.

2. Batteriemodul nach Anspruch 1, wobei eine obere Fläche der Harzschicht (700) flach ist.

3. Batteriemodul nach Anspruch 2, wobei die Harzschicht (700) derart vorgesehen ist, dass sie in vollständig engen Kontakt mit den Oberseiten der Vielzahl von Batteriezellen (300), der einen oder mehreren Stromschienen (400), den Drähten (500, 510, 520) und der Rippenstruktur (600) gebracht wird.

4. Batteriemodul nach Anspruch 1, wobei eine Höhe (H1) der Rippe (610) größer oder gleich einer Höhe des Drahtes (500, 510, 520) nach dem Bonden ist.

5. Batteriemodul nach Anspruch 4, wobei eine Höhe (H2) der Harzschicht (700) größer oder gleich der Höhe (H1) der Rippe (610) ist.

6. Batteriemodul nach Anspruch 1, wobei das Kissen (800) aus Anspruch wärmeleitenden Material hergestellt ist.

7. Batteriemodul nach Anspruch 1, wobei das Kissen (800) aus einem elastischen und komprimierbaren Material besteht.

8. Batteriemodul nach Anspruch 1, wobei eine obere Fläche der Harzschicht (700) und eine untere Fläche des Kissens (800) in engem Kontakt zueinander stehen.

9. Batteriemodul nach Anspruch 8, bei dem eine obere Oberfläche des Kissens (800) und eine untere Oberfläche des zweiten Gehäuses (200) in engem Kontakt zueinander stehen.

10. Batteriemodul nach Anspruch 9, wobei das Kissen (800) mit einer Vielzahl von Leerraumabschnitten (810) versehen ist, wobei die Leerraumabschnitten (810) durch das Kissen (800) hindurch ausgebildet sind.

11. Batteriemodul nach Anspruch 10, wobei jeder der Leerraumabschnitte (810) auf einer vertikalen Verlängerungslinie einer entsprechenden der mehreren Batteriezellen (300) angeordnet ist.

12. Batteriemodul nach Anspruch 11, wobei die Leerraumabschnitte (810) in der gleichen Anzahl wie die Vielzahl von Batteriezellen (300) ausgebildet sind.

13. Batteriepack mit dem Batteriemodul nach einem der Ansprüche 1 bis 12.

## Revendications

1. Module de batterie comprenant :
un premier boîtier (100) possédant un espace de logement ;
une pluralité de cellules de batterie (300) reçues dans l'espace de logement dans un état vertical de sorte qu'une borne d'électrode positive de chacune de la pluralité de cellules de batterie (300) soit tournée vers le haut ;
une ou plusieurs barres omnibus (400) situées à proximité des bornes d'électrode positives de la pluralité de cellules de batterie (300) ;
un conducteur (500, 510, 520) configuré pour connecter électriquement l'une à l'autre chacune de la pluralité de cellules de batterie (300) et l'une ou plusieurs barres omnibus (400) ;
une structure nervurée (600) située au-dessus de la pluralité des cellules de batterie (300), la structure nervurée (600) étant agencée avec une nervure saillante vers le haut (610) configurée pour protéger le conducteur (500, 510, 520) et une ouverture (620) configurée pour permettre au conducteur (500, 510, 520) de s'étendre à travers ;
**caractérisé en ce que**
une couche de résine (700) est agencée au-dessus de la pluralité des cellules de batterie (300), le module de batterie comprenant en outre un deuxième boîtier (200) agencé sur la couche de résine (700), le deuxième boîtier (200) étant fixé sur le premier boîtier (100), et un tampon (800) étant situé entre la couche de résine (700) et le deuxième boîtier (200).

2. Module de batterie selon la revendication 1, une surface supérieure de la couche de résine (700) étant plate.

3. Module de batterie selon la revendication 2, la couche de résine (700) étant agencée de sorte qu'elle soit placée entièrement en contact étroit avec des surfaces supérieures de la pluralité de cellules de batterie (300), de l'une ou plusieurs barres omnibus (400), des conducteurs (500, 510, 520), et de la structure nervurée (600).

4. Module de batterie selon la revendication 1, une hauteur (H1) de la nervure (610) étant égale ou supérieure à une hauteur du conducteur (500, 510, 520) après la connexion.

5. Module de batterie selon la revendication 4, une hauteur (H2) de la couche de résine (700) étant égale ou supérieure à la hauteur (H1) de la nervure (610).

6. Module de batterie selon la revendication 1, le tampon (800) étant réalisé avec un matériau conducteur thermique.

7. Module de batterie selon la revendication 1, le tampon (800) étant réalisé avec un matériau élastique et compressible.

8. Module de batterie selon la revendication 1, une surface supérieure de la couche de résine (700) et une surface inférieure du tampon (800) étant positionnées en étroit contact entre elles.

9. Module de batterie selon la revendication 8, une surface supérieure du tampon (800) et une surface inférieure du deuxième boîtier (200) étant positionnées en étroit contact entre elles.

10. Module de batterie selon la revendication 9, le tampon (800) étant doté d'une pluralité de parties d'espace (810), les parties d'espace (810) étant formées à travers le tampon (800).

11. Module de batterie selon la revendication 10, chacune des parties d'espace (810) étant située sur une ligne d'extension verticale d'une cellule correspondante de la pluralité de cellules de batterie (300).

12. Module de batterie selon la revendication 11, les parties d'espace (810) étant formées dans le même nombre que la pluralité des cellules de batterie (300).

13. Boîtier de batterie comprenant le module de batterie selon une quelconque des revendications 1 à 12.
